# EUROPÄISCHE PATENTSCHRIFT

(11) **EP 3 084 412 B1**
(45) Veröffentlichungstag und Bekanntmachung des Hinweises auf die Patenterteilung: **24.10.2018**
(21) Anmeldenummer: 14809421.2
(22) Anmeldetag: 10.12.2014
(51) Int. Cl.: G01N 27/62, H01J 49/06

(54) **GASANALYSEEINRICHTUNG UND VERFAHREN ZUR GASANALYSE**
GAS ANALYZING DEVICE AND METHOD FOR ANALYZING GAS
SYSTÈME ET PROCÉDÉ D'ANALYSE DE GAZ

(30) Priorität: 19.12.2013 DE 102013114421
(43) Veröffentlichungstag der Anmeldung: 26.10.2016
(73) Patentinhaber: Gottfried Wilhelm Leibniz Universität Hannover, 30167 Hannover (DE)
(72) Erfinder: ZIMMERMANN, Stefan, 30938 Burgwedel (DE); COCHEMS, Philipp, 28876 Bassen (DE); LANGEJÜRGEN, Jens, 32549 Bad Oeynhausen (DE); KIRK, Ansgar, 30167 Hannover (DE)
(74) Vertreter: Günther, Constantin
(86) Internationale Anmeldenummer: PCT/EP2014/077199
(87) Internationale Veröffentlichungsnummer: WO 2015/091146

(56) Entgegenhaltungen:
- WO-A2-2008/097962
- GB-A- 2 464 605
- US-A1- 2006 022 132
- US-A1- 2007 040 111

## Beschreibung

Die Erfindung betrifft eine Gasanalyseeinrichtung, die wenigstens ein Ionenmobilitätsspektrometer aufweist, gemäß dem Anspruch 1. Die Erfindung betrifft ferner ein Verfahren zur Gasanalyse mittels einer Gasanalyseeinrichtung nach dem Ionenmobilitätsspektrometrie-Verfahren gemäß dem Anspruch 8.

Allgemein betrifft die Erfindung das Gebiet der Analyse gasförmiger Stoffe, wobei der Begriff der gasförmigen Stoffe im weitesten Sinne zu verstehen ist und insbesondere auch beliebige Stoffgemische umfasst. In solchen gasförmigen Stoffen sollen bestimmte, darin enthaltene Substanzen qualitativ und/oder quantitativ detektiert werden. So besteht in der Medizintechnik, z.B. für die Atemanalyse, der Sicherheitstechnik oder der Überwachung und Steuerung/Regelung von chemischen Prozessen ein dringender Bedarf an kostengünstigen, baukleinen, schnellen und sensitiven Gasanalyseeinrichtungen zur Analyse der dort auftretenden komplexen Gasgemische. Im Bereich der Sicherheitstechnik soll z.B. eine kontinuierliche Überwachung der Konzentration unterschiedlicher Gefahrstoffe in der Umwelt, wie z.B. Toluol und das krebserregende Benzol, mit portablen Messsystemen durchgeführt werden. Die genannten Stoffe Toluol und Benzol treten häufig gemeinsam auf. Aufgrund der unterschiedlichen Toxizität sind die Grenzwerte für Benzol deutlich geringer als für Toluol. Bislang ist eine schnelle Detektion von Benzol in Gegenwart von Toluol oder Wasser mit vorhandenen portablen Messsystemen, z.B. Ionenmobilitätsspektrometern, nicht möglich.

Ein lonenmobilitätsspektrometer (IMS) hat den Vorteil, dass es ein verhältnismäßig kleines System ist, welches erfolgreich zur sehr schnellen Analyse auch komplexer Gasgemische verwendet werden kann und für eine Reihe von Stoffen über die notwendigen geringen Nachweisgrenzen verfügt. Ein lonenmobilitätsspektrometer ist z.B. in der US 4,777,363 beschrieben. Leider ist die schnelle Detektion einer Vielzahl von praxisrelevanten Stoffen beim Einsatz in Stoffgemischen oder bei Luftfeuchtigkeit aufgrund von Querempfindlichkeiten mit bekannten lonenmobilitätsspektrometern nicht möglich. Dies ist z.B. der Fall beim Einsatz für die Überwachung des Benzolgehalts der Luft in Gegenwart von Toluol oder Wasserdampf in einer praxisrelevanten Konzentration. Ein notwendiger quantitativer Nachweis vieler Stoffe ist mit einem schnellen System ohne vorherige chromatographische Vortrennung nicht möglich.

Aus der WO 2008/097962 A2 gehen Verfahren und Einrichtungen zur Ionenmobilitätsspektrometrie hervor. Aus der US 2007/0040111 A1 geht ein doppelseitiges Ionenmobilitätsspektrometer hervor.

Der Erfindung liegt daher die Aufgabe zugrunde, eine auf der lonenmobilitätsspektrometrie basierende Gasanalyseeinrichtung anzugeben, die geringere Querempfindlichkeiten für viele praxisrelevante zu detektierende Gasbestandteile aufweist Ferner soll ein entsprechendes Verfahren zur Gasanalyse angegeben werden.

Dieser Aufgabe wird durch eine Gasanalyseeinrichtung gemäß Anspruch 1 gelöst. Die freien Reaktant-Ionen stehen für eine Bildung von Analyt-Ionen zur Verfügung, mit denen dann die lonenmobilitätsspektrometrie durchgeführt werden kann. Das Wort "frei" bedeutet in diesem Zusammenhang, dass das Reaktant-Ion frei von daran gebundenen Wassermolekülen oder anderen ungewollten Bindungspartnern ist. Durch die gezielte Energiezufuhr in der Reaktionskammer können erwünschte freie Reaktant-Ionen des Ionenmobilitätsspektrometrie-Verfahrens von deren unerwünschten Bindungspartnern befreit werden und/oder Bindungen der erwünschten Reaktant-Ionen mit unerwünschten Bindungspartnern ganz oder teilweise unterdrückt werden. Auf diese Weise kann die statistische Wahrscheinlichkeit der Bindung freier Reaktant-Ionen mit einem unerwünschten Bindungspartner in der Reaktionskammer und damit die Dichte an freien Reaktant-Ionen des lonenmobilitätsspektrometrie-Verfahrens erhöht werden.

Gegenüber bekannten reinen lonenmobilitätsspektrometern ist die erfindungsgemäße Gasanalyseeinrichtung um die auf die Reaktionskammer des Ionenmobilitätsspektrometers einwirkende Energiezufuhreinrichtung erweitert. Die Energiezufuhreinrichtung kann auf unterschiedliche Weise realisiert werden. Die in die Reaktionskammer mittels der Energiezufuhreinrichtung einzuspeisende Energie kann z.B. durch Bestrahlung der Reaktionskammer mit elektromagnetischen Wellen oder durch Wärmestrahlung zugeführt werden. Die elektromagnetischen Wellen können z.B. in Form von Licht im sichtbaren Wellenlängenbereich oder in anderen Wellenlängenbereichen, z.B. im Mikrowellen-bereich, erzeugt werden. Die Energiezufuhr kann vorteilhaft auch mit Hilfe elektrischer Felder erfolgen.

Die Energiezufuhreinrichtung kann baulich in das lonenmobilitätsspektrometer, z.B. dessen Reaktionskammer, integriert sein oder extern davon angeordnet sein.

Gemäß der Erfindung weist die Gasanalyseeinrichtung eine mit einer Reaktionskammer des lonenmobilititätsspektrometers gekoppelte Unterdruckerzeugungseinrichtung auf, die zur Erzeugung eines Unterdrucks gegenüber dem Atmosphärendruck wenigstens in der Reaktionskammer eingerichtet ist. Dementsprechend ist das Ionenmobilitätsspektrometer zumindest dahingehend modifiziert, dass es eine mit Unterdruck betriebene Reaktionskammer aufweist. Bekannte autark verwendbare Ionenmobilitätsspektrometer werden dagegen bei Atmosphärendruck oder einem leichten Überdruck betrieben, um durch den Überdruck Verunreinigungen aus den inneren Kammern des lonenmobilitätsspektrometers fern zu halten. Die Unterdruckerzeugungseinrichtung kann dabei unmittelbar oder mittelbar, z.B. über eine andere Kammer des Ionenmobilititätsspektrometers, mit einer Reaktionskammer gekoppelt sein. Die Unterdruckerzeugungseinrichtung kann grundsätzlich von beliebiger Bauart sein, z.B. in Form einer Pumpe, z.B. eine Membranpumpe, eine Drehschieberpumpe oder eine andere Pumpe, oder in Form eines Gebläses oder eines Kompressors. Der gegenüber dem Atmosphärendruck zu erzeugende Unterdruck muss dabei nicht eine extrem große Druckdifferenz zum Atmosphärendruck annehmen, insbesondere nicht im Bereich von Druckwerten, die üblicherweise als Hochvakuum bezeichnet werden, wie es z.B. bei einem Massenspektrometer erforderlich ist. Gemäß der Erfindung wird durch die Unterdruckerzeugungseinrichtung ein Unterdruck im Bereich von 2 mbar bis 100 mbar (Absolutdruck) erzeugt. Dies hat den Vorteil, dass die Gasanalyseeinrichtung mit einfachen kostengünstigen Bauteilen realisiert werden kann. Insbesondere die Unterdruckerzeugungseinrichtung kann mit herkömmlichen, marktgängigen Produkten realisiert werden.

Dieses Merkmal der Erfindung hat den Vorteil, dass durch die Erzeugung des Unterdrucks im Reaktionsraum die Teilchendichte des im Reaktionsraum befindlichen Gasgemischs reduziert wird. Durch die Reduzierung der Teilchendichte kann die mittlere freie Weglänge, die die Teilchen in der Reaktionskammer zurücklegen können, erhöht werden. Dies eröffnet die Möglichkeit, die Teilchen in der Reaktionskammer zwischen zwei Stößen soweit durch Energiezufuhr z.B. durch ein elektrisches Feld zu beschleunigen, dass ein Aufbrechen unerwünschter Teilchen-Bindungen erfolgen kann, indem die Teilchen durch Beschleunigung soweit mit Energie angereichert werden, dass die Bindungsenergie überschritten wird. Hierdurch können in der Reaktionskammer erwünschte freie Reaktant-Ionen für eine chemische Gasphasenionisation in höherer Konzentration bereitgestellt werden, d.h. bisher mit unerwünschten Teilchen gebundene Reaktant-Ionen werden von den unerwünschten Teilchen zumindest zu einem größeren Anteil befreit oder gehen gar nicht erst unerwünschte Bindungen ein und werden damit in der erwünschten reinen Reaktant-Ionen-Form bereitgestellt. Dies verbessert die Reaktionswahrscheinlichkeit der Reaktant-Ionen mit zu analysierenden Gasbestandteilen, den sogenannten Analyten. Es können in größerer Menge gewünschte Analyt-Ionen durch eine chemische Gasphasenionisation erzeugt werden, da die Ionisationswahrscheinlichkeit vieler Analyte bei einer hohen Anzahl an ungebundenen Reaktant-Ionen deutlich erhöht ist bzw. die Ionisation in dieser Form erst möglich ist. Hierdurch kann die Messempfindlichkeit, d.h. die Sensitivität, der Gasanalyseeinrichtung für eine Vielzahl von bisher mit einem lonenmobilitätsspektrometer nicht in komplexen Stoffgemischen erfassbaren Analyten signifikant gesteigert werden. Die in dieser Weise verbesserte Gasanalyseeinrichtung eignet sich daher für eine Vielzahl von Anwendungsfällen, wie z.B. die direkte Überwachung der Umgebungsluft auf toxische Bestandteile, die Atemanalyse in der Medizintechnik, die kontinuierliche Qualitätsüberwachung in der chemischen Industrie, z.B. bei der Herstellung von Duftstoffen, und in anderen Bereichen wie z.B. der Sicherheitstechnik.

In einem beispielhaft beschriebenen Betriebsverfahren eines Ionenmobilitätsspektrometers werden durch eine lonisationsquelle protonierte Wasserionen H₃O⁺ (Oxonium) als Reaktant-Ionen erzeugt, z.B. durch Ionisation der in der Luft enthaltenen Feuchtigkeit. In der eigentlichen chemischen Gasphasenionisation soll dann in der Reaktionskammer das Proton H⁺ an die Analyten mit höherer Protonenaffinität als das Oxonium abgegeben werden und die Analyten dadurch ionisieren. Hierdurch entstehen die Analyt-Ionen, die im weiteren Verlauf der lonenmobilitätsspektrometrie dann analysiert werden. Neben dem zuvor genannten gewünschten lonisierungsprozess kommt es auch zu konkurrierenden, unerwünschten Ionisationsprozessen, was die Reaktant-Ionen verbraucht oder weniger geeignet für die erwünschten lonisationsprozesse macht, da sie für viele Analyte in dieser Form nicht mehr für eine Ionisation zur Verfügung stehen. Die in der Praxisanwendung immer auftretende Luftfeuchte führt zu einer Bildung von Wasserclustern (H₃O⁺)(H₂O)ₙ mit n= 1, 2, 3.... Diese führen zu einer Unterdrückung der gewünschten Ionisation über die reinen Reaktant-Ionen. Zudem führt das gleichzeitige Vorhandensein von Analyten mit unterschiedlichen Protonaffinitäten zu konkurrierenden Ionisationsprozessen, wodurch andere Stoffe "maskiert" werden. Im Ergebnis wird die Menge von zur Ionisation der Analyte zur Verfügung stehenden nicht an Wassermolekülen oder andere Analyte gebundene freien Reaktant-Ionen soweit verringert, dass die Sensitivität für eine Messung einer weiteren Substanz mit geringerer Protonenaffinität abnimmt und eine Erfassung häufig nicht möglich ist. Mit der erfindungsgemäßen Gasanalyseeinrichtung ist aufgrund des in der Reaktionskammer erzeugten zusätzlichen Energieübertrags auf die Reaktant-Ionen bei einer geeigneten Kombination aus hoher Feldstärke und sich aus dem Gasdruck ergebenden mittleren freien Weglänge der Ionen eine Erhöhung der Dichte an nicht an Wassermolekülen oder andere Analyte gebundene freien Reaktant-Ionen möglich.

Mit der erfindungsgemäßen Gasanalysevorrichtung sind sehr schnelle Messungen und damit eine schnelle Wiederholung von Messungen möglich, ohne dass eine chromatographische Vortrennung des zu analysierenden Gasgemisches notwendig ist. Messungen können z.B. mit einer Frequenz von 500 Hz durchgeführt werden. Die erfindungsgemäße Gasanalysevorrichtung kann daher für eine Echtzeit-Gasanalyse eingesetzt werden. Infolge der möglichen hohen Wiederholrate der Messungen kann auch eine Mittelung über mehrere Messzyklen erfolgen, um das Ausgangssignal zu verbessern, insbesondere das Signal-zu-Rausch-Verhältnis.

Die erwünschte Energiezufuhr zu den Reaktant-Ionen in der Reaktionskammer zur Unterdrückung oder Auftrennung der unerwünschten Bindungen erfolgt durch Erzeugen eines elektrischen Felds in der Reaktionskammer Da auch die unerwünscht gebundenen Moleküle, die sogenannten Wassercluster, als Ionen vorliegen, werden diese durch das elektrische Feld beschleunigt. Gemäß der Erfindung ist daher vorgesehen, dass die Gasanalyseeinrichtung als Energiezufuhreinrichtung eine erste Felderzeugungseinrichtung aufweist, die zum Erzeugen eines elektrischen Felds in der Reaktionskammer eingerichtet ist. Hierdurch wird das lonenmobilitätsspektrometer im Vergleich zu bekannten Ionenmobilitätsspektrometern weiter modifiziert, indem die erste Felderzeugungseinrichtung ergänzt wird. Infolge des in der Reaktionskammer gebildeten Unterdrucks kann in Verbindung mit dem elektrischen Feld eine sehr effiziente Auftrennung der Wassercluster erfolgen, sodass anschließend eine große Anzahl von gewünschten reinen Reaktant-Ionen vorhanden ist. Das elektrische Feld kann z.B. Feldstärken im Bereich von 30 bis 100 V pro Millimeter aufweisen. Wassercluster, die sich gebildet haben, dissoziieren unter diesen Bedingungen in der Reaktionskammer. Infolge der hohen kinetischen Energien wird zudem die Wahrscheinlichkeit einer Neubildung von Wasserclustern erheblich reduziert. Dies ist daher möglich, weil die im elektrischen Feld aufgenommene Energie die Bindungsenergie größerer Wassercluster überschreitet und damit die vorhandenen Wasserstoffbrückenbindungen aufgelöst werden. Daher steigt im Mittel die Dichte an freien Reaktant-Ionen. Somit wird eine gleichzeitige Ionisation verschiedener Analyte ermöglicht, weil konkurrierende lonisationsprozesse aufgrund der hohen Dichte an reinen Reaktant-Ionen bis zu einem bestimmten Konzentrationsbereich der Analyten nicht ins Gewicht fallen. Weiterhin ist somit auch eine direkte Analyse von gasförmigen Proben mit hoher Luftfeuchtigkeit möglich.

Die erste Felderzeugungseinrichtung kann an oder in der Reaktionskammer angeordnet sein, oder zumindest so im Bereich der Reaktionskammer, dass das gewünschte elektrische Feld in der Reaktionskammer erzeugt werden kann. Die erste Felderzeugungseinrichtung kann insbesondere zum Erzeugen eines elektrischen Felds mit einem Potentialgefälle von einem Ionisationsquelle-seitigen Bereich der Reaktionskammer in Richtung zu einem Ionentor eingerichtet sein.

Der in der Reaktionskammer vorliegende Feldverlauf kann systematisch verändert werden, so dass sich unterschiedliche Dichten an freien und an Wasser-gebundenen Reaktant-Ionen ausbilden. Dadurch kann eine Analyse mit hoher Wiederholrate unter unterschiedlichen chemischen lonisationsbedingungen durchgeführt werden, wodurch weitere Informationen insbesondere über die Protonenaffinität der verschiedenen Stoffe im zu analysierenden Gasgemisch gewonnen werden können.

Die Gasanalyseeinrichtung und insbesondere deren lonenmobilitätsspektrometer kann, abgesehen von den erläuterten Modifikationen, ansonsten wie bekannte Ionenmobilitätsspektrometer aufgebaut sein. Insbesondere kann die Gasanalyseeinrichtung bzw. deren lonenmobilitätsspektrometer wenigstens folgende Komponenten aufweisen:
a) einen Ionisationsquellen-Bereich mit einer Ionisationsquelle,
b) die Reaktionskammer, die mit dem Ionisationsquellen-Bereich gekoppelt ist,
c) eine Driftkammer, die einen Driftgas-Zufuhranschluss aufweist, der mit einer Gaszufuhrleitung zur Zuführung von Driftgas in die Driftkammer verbunden ist,
d) ein schaltbares Ionentor zwischen der Reaktionskammer und der Driftkammer,
e) einen lonendetektor an dem dem Ionentor abgewandten Ende der Driftkammer,
f) eine zweite Felderzeugungseinrichtung, die zum Erzeugen eines elektrischen Felds in der Driftkammer eingerichtet ist.

Die zweite Felderzeugungseinrichtung kann an oder in der Driftkammer angeordnet sein, oder zumindest so im Bereich der Driftkammer, dass das gewünschte elektrische Feld in der Driftkammer erzeugt werden kann. Die zweite Felderzeugungseinrichtung kann insbesondere zum Erzeugen eines elektrischen Felds mit einem Potentialgefälle von dem Ionentor in Richtung zum lonendetektor eingerichtet sein.

Die erste und/oder die zweite Felderzeugungseinrichtung kann z.B. in Richtung des gewünschten Potentialgefälles des zu erzeugenden elektrischen Felds hintereinander angeordnete Elektroden aufweisen, z.B. in der Reaktionskammer bzw. der Driftkammer angeordnete Ringelektroden. Die erste und/oder die zweite Felderzeugungseinrichtung kann auch mit einer sich in Richtung des gewünschten Potentialgefälles längs erstreckenden Einzel-Elektrode, die aus einem Material mit relativ hohem spezifischen Widerstand hergestellt ist, gebildet sein, z.B. in Form einer einheitlichen Ringelektrode. Infolge des relativ hohen Widerstandswerts kann auch das gewünschte elektrische Feld in Längsrichtung, d.h. in gewünschter Bewegungsrichtung der Ionen, erzeugt werden. So kann eine solche einheitliche Ringelektrode z.B. durch einen Zylinder aus leitfähigem Glas gebildet werden. Die erste und/oder die zweite Felderzeugungseinrichtung können auch Kombinationen der zuvor genannten Arten von Elektroden aufweisen.

Das lonentor dient als temporäre Sperre für die Analyt-Ionen auf ihrem Weg von der Reaktionskammer in die Driftkammer. Das Ionentor wird z.B. nach einem gewissen zeitlichen Muster gepulst betrieben, derart, dass es geöffnet und geschlossen wird und in den geöffneten Phasen Analyt-Ionen von der Reaktionskammer in die Driftkammer gelangen. Hierdurch können definierte, voneinander getrennte Messzyklen der Gasanalyseeinrichtung, entsprechend dem Schalttakt des Ionentors, vorgegeben werden.

Das Ionentor kann entsprechend den Ionentoren bei bekannten Ionenmobilitätsspektrometern ausgebildet sein, z.B. mit zwei in Bewegungsrichtung der Analyt-Ionen hintereinander angeordneten Elektroden oder in einer Ebene verschachtelt zueinander angeordneten Elektroden. Gemäß einer vorteilhaften Weiterbildung der Erfindung weist das Ionentor wenigstens drei in Richtung von der Reaktionskammer zu der Driftkammer hintereinander angeordnete Elektroden auf. Die Elektroden sind mit unterschiedlichen elektrischen Potentialen verbindbar oder fest verbunden. Gemäß einer vorteilhaften Weiterbildung der Erfindung kann die mittlere Elektrode des Ionentors mittels einer elektrischen Schalteinrichtung der Gasanalyseeinrichtung potentialumschaltbar sein. Mittels der Schalteinrichtung kann die mittlere Elektrode somit von einem elektrischen Potential auf ein anderes elektrisches Potential umgeschaltet werden. Ein solches Ionentor ist hinsichtlich der Sperrwirkung hoch effizient. Ein weiterer Vorteil ist, dass durch die drei hintereinander angeordneten Elektroden jeweils die zueinander benachbarten Elektroden paarweise mit einem elektrischen Feld mit einer Feldstärke betrieben werden können, die der Feldstärke in der benachbarten Kammer, d.h. auf der einen Seite der Reaktionskammer und auf der anderen Seite der Driftkammer, entspricht. Dies hat wiederum den Vorteil, dass durch das Schalten des Ionentors zwischen dem gesperrten und dem geöffneten Zustand die vorhandenen elektrischen Felder in der Reaktionskammer und der Driftkammer weitgehend unbeeinflusst gelassen werden können. Die Elektroden des Ionentors können z.B. als Ringelektroden oder als Gitterelektroden ausgebildet sein.

Gemäß einer vorteilhaften Weiterbildung der Erfindung ist die Unterdruckerzeugungseinrichtung zur Erzeugung eines Driftgasstroms entgegen der Driftrichtung der Ionen in der Driftkammer eingerichtet. Dies hat den Vorteil, dass das für die Durchführung der lonenmobilitätsspektrometrie ohnehin erforderliche Driftgas durch die Driftkammer geführt werden kann, ohne dass zusätzliche Bauteile erforderlich sind. Vielmehr kann die Unterdruckerzeugungseinrichtung hierzu mit verwendet werden. Durch den erzeugten Driftgasstrom wird ständig frisches Driftgas zugeführt und einer Verunreinigung der Driftkammer durch unerwünschte Teilchen entgegengewirkt, da der Driftgasstrom zu einer Spülung der Driftkammer führt. Das Driftgas kann dabei durch Filter gereinigt und getrocknet werden.

Die Unterdruckerzeugungseinrichtung kann grundsätzlich an verschiedenen Stellen der Gasanalyseeinrichtung bzw. eines Gehäusekorpus des Ionenmobilitätsspektrometers angeschlossen sein. In einer vorteilhaften Ausgestaltung der Erfindung kann die Reaktionskammer mit der Driftkammer druckverbunden sein, d.h. es erfolgt ein Druckausgleich zwischen der Reaktionskammer und der Driftkammer. Hierdurch ist der vorherrschende Druck in der Reaktionskammer und in der Driftkammer im Wesentlichen gleich, abgesehen von durch Strömungseffekte auftretenden kleinen Druckdifferenzen. So kann die Unterdruckerzeugungseinrichtung beispielsweise an einen Absauganschluss der Gasanalyseeinrichtung angeschlossen sein.

Gemäß einer vorteilhaften Weiterbildung der Erfindung weist die Unterdruckerzeugungseinrichtung einen Sauganschluss auf, der mit einem Absauganschluss der Gasanalyseeinrichtung verbunden ist, der in Driftrichtung der Ionen vor dem Ionentor angeordnet ist. So kann der Absauganschluss z.B. in die Reaktionskammer oder in den Ionisationsquellen-Bereich münden. Dies hat den Vorteil, dass der Driftgasstrom auch ganz oder teilweise durch die Reaktionskammer geführt werden kann. Hierdurch kann auch die Reaktionskammer von unerwünschten Teilchen gereinigt werden. Dies kommt wiederum der Sensitivität und Messgenauigkeit der Gasanalyseeinrichtung zugute.

Gemäß einer vorteilhaften Weiterbildung der Erfindung weist die Gasanalyseeinrichtung einen Massenflussregler auf, der zur Zuführung des Driftgases eingerichtet ist und mit der Driftkammer verbunden ist. Dies hat den Vorteil, dass ein präzise einstellbarer, konstanter Strom von Driftgas der Gasanalyseeinrichtung zugeführt werden kann. Der Driftgasstrom kann aber auch über eine konstante Flussrestriktion bei bekannter Druckdifferenz eingestellt und gehalten werden, was den Aufbau des Systems vereinfacht.

Gemäß der Erfindung weist die Gasanalyseeinrichtung wenigstens eine Heizvorrichtung auf, die zur Beheizung der Reaktionskammer und/oder der Driftkammer eingerichtet ist. Die Heizvorrichtung kann insbesondere über einen Temperaturregler betrieben werden, um die Temperatur in der Reaktionskammer bzw. der Driftkammer konstant zu halten. Durch eine solche gezielte Beheizung können z.B. die Ansprechzeiten der Gasanalyseeinrichtung für stark absorbierende Gase weiter verringert werden. Weiterhin kann über eine Heizung auch die kinetische Energie der Stöße der Gasteilchen sowohl in der Reaktionskammer, als auch in der Driftkammer erhöht werden, was zu einer vorteilhaften Verringerung ungewollter Bindungen der Reaktant-Ionen führt. Weiterhin verhindert eine definierte Temperierung des Aufbaus einen Einfluss der Umgebungstemperatur auf die lonenmobilität als auch auf andere temperaturabhängige Größen.

Die eingangs genannte Aufgabe wird außerdem gemäß Anspruch 8 gelöst durch ein Verfahren zur Gasanalyse mittels einer Gasanalyseeinrichtung nach dem Ionenmobilitätsspektrometrie-Verfahren, wobei die Dichte an freien Reaktant-Ionen des Ionenmobilitätsspektrometrie-Verfahrens in der Reaktionskammer durch Energiezufuhr mittels einer auf eine Reaktionskammer des lonenmobilitätsspektrometers einwirkenden Energiezufuhreinrichtung manipuliert wird, um erwünschte freie Reaktant-Ionen von deren unerwünschten Bindungspartnern zu befreien und/oder Bindungen der erwünschten Reaktant-Ionen mit unerwünschten Bindungspartnern ganz oder teilweise zu unterdrücken. Mit dem Verfahren können die gleichen Vorteile erzielt werden, wie zuvor für die Gasanalyseeinrichtung beschrieben. Zur Durchführung des Verfahrens kann insbesondere eine Gasanalyseeinrichtung der eingangs beschriebenen Art verwendet werden.

Gemäß der Erfindung werden in der Reaktionskammer bereits vorhandene ionisierte Teilchen durch ein elektrisches Feld soweit beschleunigt, dass erwünschte Reaktant-Ionen des Ionenmobilitätsspektrometrie-Verfahrens von deren unerwünschten Bindungspartnern befreit werden und/oder Bindungen der erwünschten Reaktant-Ionen mit unerwünschten Bindungspartnern ganz oder teilweise unterdrückt werden. So werden durch die zugeführte kinetische Energie beispielsweise die Wasserstoffbrückenbindungen der eingangs beschriebenen Wassercluster aufgebrochen. Es können auch unerwünschte Bindungen von vornherein unterdrückt werden, wobei in der Regel keine hundertprozentige Unterdrückung erfolgt, aber zumindest eine deutliche Reduzierung der Häufigkeit unerwünschter Bindungen. Dies kann z.B. dadurch erfolgen, in der Reaktionskammer bereits vorhandene ionisierte Teilchen durch ein elektrisches Feld soweit beschleunigt werden, dass ihre kinetische Energie die Bindungsenergie zwischen erwünschten Reaktant-Ionen des Ionenmobilitätsspektrometrie-Verfahrens und unerwünschten Teilchen überschreitet. Das elektrische Feld in der Reaktionskammer kann z.B. durch die Energiezufuhreinrichtung in Form der erwähnten ersten Felderzeugungseinrichtung erzeugt werden.

Gemäß der Erfindung wird in der Reaktionskammer und in der Driftkammer ein elektrisches Feld in gewünschter Driftrichtung der Ionen in der Driftkammer erzeugt. Durch das elektrische Feld in der Reaktionskammer erfolgt eine Beschleunigung der dort vorhandenen Ionen, wodurch die zuvor beschriebene Auflösung der Bindungen der erwünschten Reaktant-Ionen erzielt wird. Infolge der durch den Unterdruck erzeugten relativ hohen mittleren freien Weglänge reicht ein vergleichsweise schwaches elektrisches Feld, z.B. mit Feldstärken im Bereich von 30 bis 100 V pro Millimeter, schon für den gewünschten Effekt und damit eine deutliche Steigerung der für eine Reaktion mit wenig protonenaffinen Analytsubstanzen zur Verfügung stehenden freien, nicht an Wasser gebundenen Reaktant-Ionen aus.

Gemäß der Erfindung wird wenigstens die Reaktionskammer während des Betriebs der Gasanalyseeinrichtung mit einem Unterdruck gegenüber dem Atmosphärendruck beaufschlagt.

Gemäß einer vorteilhaften Weiterbildung der Erfindung wird zu analysierendes Gas mittels des Unterdrucks in der Reaktionskammer durch einen Analyten-Einlassanschluss der Gasanalyseeinrichtung in die Reaktionskammer eingesaugt. Der erzeugte Unterdruck kann daher für eine weitere Funktion genutzt werden, nämlich die Zuführung des zu analysierenden Gases in die Gasanalyseeinrichtung. Hierdurch kann insbesondere ein stetiger Strom zu analysierendes Gases der Gasanalyseeinrichtung zugeführt werden.

Gemäß einer vorteilhaften Weiterbildung der Erfindung wird ein Driftgas in die Driftkammer eingeleitet und durch den Unterdruck in der Reaktionskammer entgegen der Driftrichtung der Ionen durch die Driftkammer geführt.

Gemäß einer vorteilhaften Weiterbildung der Erfindung wird ein Driftgasmassefluss geregelt in die Driftkammer eingespeist. Dies hat den Vorteil, dass ein präzise einstellbarer, konstanter Strom von Driftgas der Gasanalyseeinrichtung zugeführt werden kann.

Gemäß einer vorteilhaften Weiterbildung der Erfindung wird Wasserdampf oder ein anderes Makeupgas in die Reaktionskammer eingespeist. Hierdurch kann die Menge an möglichen Reaktant-Ionen weiter erhöht bzw. variiert werden. Aufgrund der somit in der Reaktionskammer existierenden hohen Dichte an freien Reaktant-Ionen können verschiedene Analyte gleichzeitig ionisiert werden und es kann einer Maskierung von Stoffen entgegengewirkt werden. Weiterhin kann der Einfluss der im Probengas vorliegenden Luftfeuchte deutlich verringert werden und eine direkte Detektion von Substanzen mit Protonenaffinitäten, die unter denen von Wasserclustern liegen, im feuchten Probengasgemisch überhaupt erst ermöglicht werden. Als Makeupgas kommen insbesondere solche Gase in Betracht, mit denen eine geänderte Protonenaffinität erzeugt werden kann, z.B. Ammoniak.

Gemäß einer vorteilhaften Weiterbildung der Erfindung wird die Energiezufuhr in der Reaktionskammer systematisch verändert, um Aussagen über die lonisierbarkeit der zu analysierenden Substanzen bei unterschiedlich stark gebundenen Reaktant-Ionen zu erhalten. Der im Reaktionsraum vorliegende Feldverlauf kann systematisch verändert werden, so dass sich unterschiedliche Dichten an freien und an Wasser gebundenen Reaktant-Ionen ausbilden. Dadurch kann eine Analyse mit hoher Wiederholrate unter unterschiedlichen chemischen lonisationsbedingungen durchgeführt werden, wodurch weitere Informationen insb. über die Protonenaffinität der verschiedenen Stoffe im zu analysierenden Gasgemisch gewonnen werden können.

Die erfindungsgemäße Gasanalyseeinrichtung kann besonders vorteilhaft mit folgenden Betriebsparametern eingesetzt werden. Entsprechend kann auch das erfindungsgemäße Verfahren zur Gasanalyse betrieben werden. Hierbei wird als Feldstärke die durch die erste Felderzeugungseinrichtung erzeugte Feldstärke des elektrischen Felds in der Reaktionskammer angegeben. Die Driftkammer kann mit vergleichbaren Feldstärken betrieben werden. Mit den Druckwerten wird der Absolutdruck, der durch die Unterdruckerzeugungseinrichtung in der Reaktionskammer erzeugt ist, angegeben.

Vorteilhaft ist eine Feldstärke im Bereich von 12,5 V/cm pro mbar Absolutdruck bis 37,5 V/cm pro mbar Absolutdruck. Der Absolutdruck bezieht sich dabei auf den gewählten Unterdruck, den die Unterdruckerzeugungseinrichtung in der Reaktionskammer erzeugt.

Hierbei kann für die Bestimmung der einzustellenden Feldstärke ein gewünschter Sollwert des Unterdrucks, den die Unterdruckerzeugungseinrichtung erzeugt, eingesetzt werden. Der von der Unterdruckerzeugungseinrichtung erzeugte Unterdruck kann z. B. mittels eines Drucksensors überwacht werden. Es kann eine Druckregelung zur Erzeugung eines konstanten Werts des Absolutdrucks der Reaktionskammer abhängig vom durch den Drucksensor ermittelten Wert durchgeführt werden. Alternativ oder zusätzlich kann auch die Feldstärke durch automatische Steuerung der ersten Felderzeugungseinrichtung bzw. von dessen Spannungsquelle in Abhängigkeit vom durch den Drucksensor erfassten Istwert des Absolutdrucks nachgeführt werden. Bei vom gewünschten Sollwert des Absolutdrucks nach oben hin abweichenden Druckwert kann die Feldstärke entsprechend erhöht werden, bei nach unten abweichendem Druckwert entsprechend verringert werden.

Vorteilhaft wird dabei das lonenmobilitätsspektrometer bei Raumtemperatur betrieben, z. B. im Bereich von 15 °C bis 30 °C, z. B bei 20 °C. In bestimmten Anwendungen kann aber auch ein Aufheizen des Systems, zumindest des Ionenmobilitätsspektrometers, von Vorteil sein, z.B. auf eine Temperatur im Bereich von 30° C bis 70 °C oder von 70 °C bis 200 °C. Generell ist daher ein Temperaturbereich von 15 bis 200 °C vorteilhaft.

Insbesondere können bei diesen Betriebsbedingungen je nach gewähltem Absolutdruck in der Reaktionskammer (nachfolgend in mbar angegeben) Feldstärkewerte des elektrischen Felds in der Reaktionskammer in folgenden Bereichen eingestellt sein.

| | | | | |
|---|---|---|---|---|
| Bei 2 mbar | : | 25 V/cm | bis | 75 V/cm |
| Bei 10 mbar | : | 125 V/cm | bis | 375 V/cm |
| Bei 20 mbar | : | 250 V/cm | bis | 750 V/cm |
| Bei 50 mbar | : | 625 V/cm | bis | 1875 V/cm |
| Bei 100 mbar | : | 1250 V/cm | bis | 3750 V/cm |

Die Erfindung wird nachfolgend anhand von Ausführungsbeispielen unter Verwendung von Zeichnungen näher erläutert.

Es zeigen
- Figur 1: den prinzipiellen Aufbau einer Gasanalyseeinrichtung in schematischer Darstellung und
- Figuren 2 bis 4: den in Figur 1 links dargestellten Bereich der Gasanalyseeinrichtung ausschnittsweise mit verschiedenen Ausführungsformen einer lonisationsquelle und
- Figur 5: die Gasanalyseeinrichtung gemäß Figur 1 mit weiteren Komponenten und
- Figuren 6 und 7: die Gasanalyseeinrichtung gemäß Figur 1 mit unterschiedlichen Ausführungen von Felderzeugungseinrichtungen und
- Figuren 8 bis 12: ausschnittsweise den mittleren Bereich der Gasanalyseeinrichtung gemäß Figur 1 mit unterschiedlichen Ausführungen eines Ionentors und
- Figur 13: verschiedene Ausführungsformen von Elektroden des Ionentors und
- Figur 14: eine konstruktive Ausführung eines lonenmobilitätsspektrometers in seitlicher Schnittansicht und
- Figur 15: ein mit der Gasanalyseeinrichtung erzeugtes Spektrogramm.

In den Figuren werden gleiche Bezugszeichen für einander entsprechende Elemente verwendet.

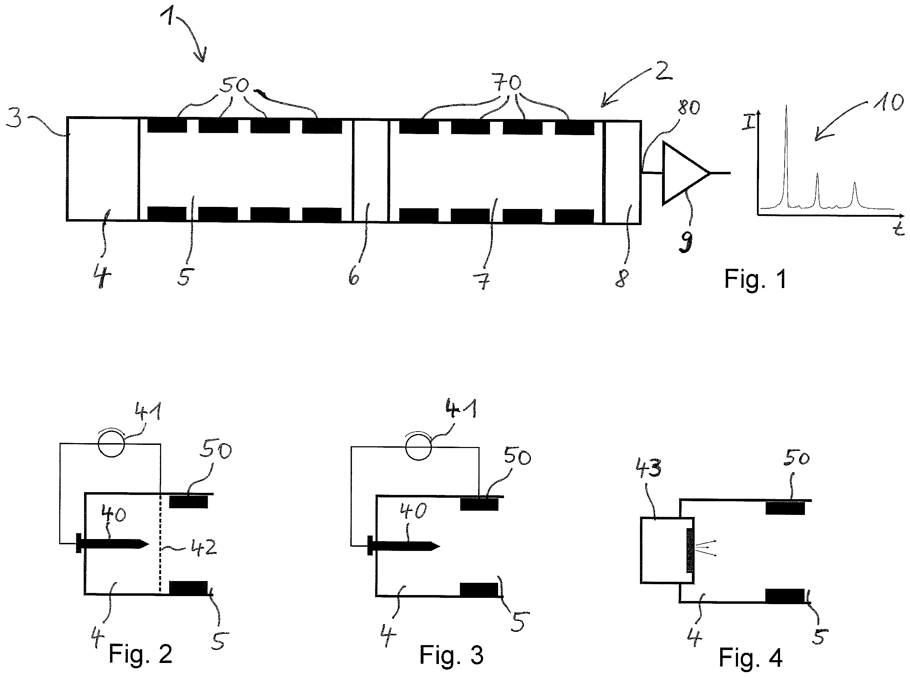

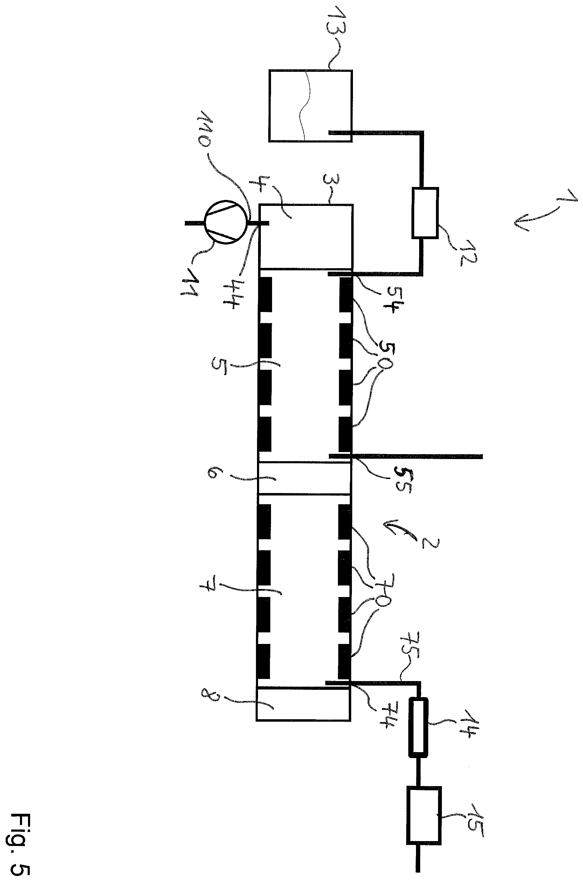

Allgemein sei noch darauf hingewiesen, dass die Figuren 1 bis 4 und 6 bis 12 die Gasanalyseeinrichtung bzw. dessen lonenmobilitätsspektrometer hinsichtlich des Aufbaus und der elektrischen Beschaltung zeigen, während die Figur 5 den gleichen Gegenstand hinsichtlich der Anschlüsse der Druckleitungen sowie der Zuführung der Gase und sonstigen Substanzen zeigt. Die beschriebene Gasanalyseeinrichtung weist immer eine Kombination aus elektrischer Beschaltung und den in Figur 5 dargestellten Verbindungen auf, was jedoch der besseren Übersicht halber nicht kombiniert wiedergegeben ist.

Die in der Figur 1 dargestellte Gasanalyseeinrichtung 1 weist ein Ionenmobilitätsspektrometer 2 auf, das einen z.B. röhren- oder tubusförmigen Gehäusekorpus 3 hat. Der Gehäusekorpus 3 unterteilt sich in einen Ionisationsquellen-Bereich 4, eine Reaktionskammer 5, ein Ionentor 6, eine Driftkammer 7 sowie einen lonendetektor 8, die wie in Figur 1 dargestellt in der zuvor genannten Reihenfolge hintereinander angeordnet sind. Der lonendetektor 8, der z.B. als Faraday-Detektor ausgebildet sein kann, z.B. in Becherform oder in Form einer Metallplatte, ist mit einer an einem elektrischen Anschluss 80 des Ionenmobilitätsspektrometers 2 angeschlossenen Verstärker 9 verbunden. Durch den Verstärker 9 wird der über den Anschluss 80 zugeführte, durch die Ladungen der Ionen erzeugte elektrische Strom verstärkt, sodass sich am Ausgang des Verstärkers 9 ein Spektrogramm 10 ergibt. Die Figur 1 zeigt ferner, dass in der Reaktionskammer 5 und in der Driftkammer 7 Elektroden 50, 70 einer ersten bzw. zweiten Felderzeugungseinrichtung angeordnet sind. Die Elektroden 50, 70 sind im dargestellten Ausführungsbeispiel als Ringelektroden ausgebildet, die einen Ring im Inneren der Reaktionskammer 5 bzw. der Driftkammer 7 bilden.

Anhand der Figuren 2 bis 4 seien zunächst verschiedene Ausführungsformen des lonisationsquellen-Bereichs 4 der Gasanalyseeinrichtung 1 gemäß Figur 1 erläutert. Die Figur 2 zeigt eine Ionisation mit Hilfe einer Koronaentladung in Point-to-plane Geometrie. Hierbei ist einer Koronanadel 40, die an der linken Stirnseite des Gehäusekorpus 3 in den Ionisationsquellen-Bereich 4 eingeführt ist, über eine elektrische Leitung mit einer Spannungsquelle 41 verbunden, die eine Koronaspannung zur Verfügung stellt. Die Spannungsquelle 41 ist mit ihrem anderen Anschluss mit einer Gitterelektrode 42 elektrisch verbunden, die im Inneren des Gehäusekorpus 3 im Ionisationsquellen-Bereich 4 angeordnet ist. Zwischen der Koronanadel 40 und der Gitterelektrode 42 wird eine Koronaentladung erzeugt, die zu einer Ionisation der dort vorhandenen Gasmoleküle führt.

In der Ausführungsform des lonisationsquellen-Bereichs 4 gemäß Figur 3 ist keine Gitterelektrode 42 vorgesehen. Stattdessen ist die Spannungsquelle 41 mit der dem Ionisationsquellen-Bereich 4 nächstgelegenen Ringelektrode 50 der Reaktionskammer 5 sowie mit der Koronanadel 40 verbunden. Auf diese Weise lässt sich eine Ionisation mit Hilfe einer Koronaentladung in Point-to-ring Geometrie erreichen.

In der Ausführungsform des Ionisationsquellen-Bereichs 4 gemäß Figur 4 ist im Ionisationsquellen-Bereich 4 ein Elektronenemitter 43 angeordnet, mit dem ebenfalls eine Ionisation des Gases durchgeführt werden kann.

Die lonisationsquelle der Gasanalyseeinrichtung 1 kann kontinuierlich oder gepulst betrieben werden.

Die Figur 5 zeigt verschiedene über Hohlleitungen mit dem Gehäusekorpus 3 des lonenmobilitätsspektrometers 2 verbundene weitere Bauteile der Gasanalyseeinrichtung 1. Ein Absauganschluss 44, der an dem Gehäusekorpus 3 im Ionisationsquellen-Bereich 4 angeordnet ist, aber auch z.B. im Bereich der Reaktionskammer 5 angeordnet sein kann, ist mit einem Sauganschluss 110 einer Unterdruckerzeugungseinrichtung 11 verbunden, z.B. einer Pumpe.

Die für die Ionisation im Ionisationsquellen-Bereich 4 erforderlichen Wassermoleküle können z.B. durch Luftfeuchtigkeit von in die Gasanalyseeinrichtung eingebrachter Umgebungsluft stammen. Insbesondere im Fall relativ trockener Luft kann über einen Wasserzufuhranschluss 54 von einem Wassertank 13 zusätzliches Wasser in den Gehäusekorpus 3 geleitet werden, z.B. direkt in die Reaktionskammer 5. Die Zufuhr des Wassers, z.B. in Form von Wasserdampf, kann über eine mit dem Wasserzufuhranschluss 54 verbundene Hohlleitung direkt von dem Wassertank 13 erfolgen, oder, wie in der Figur 5 dargestellt, über einen dazwischen geschalteten Massenflussregler 12. Durch den Massenflussregler 12 kann die Wasserzufuhr definiert eingestellt und konstant gehalten werden.

Der Gehäusekorpus 3 weist ferner einen Analyten-Einlassanschluss 55 zum Zuführen des Analyten, d.h. des zu analysierenden Probengases aus der Umgebung, auf. Der Analyten-Einlassanschluss 55 kann z.B. in die Reaktionskammer 5 münden, insbesondere an dem Ionentor 6 zugewandten Ende der Reaktionskammer 5.

Der Gehäusekorpus 3 weist ferner einen Driftgas-Zufuhranschluss 74 auf, der über eine Hohlleitung mit einem Driftgasvorrat verbunden ist. Als Driftgas können grundsätzlich diverse sich mit den Analyt-Ionen chemisch/physikalisch neutral verhaltende Gase verwendet werden, wie z.B. Stickstoff oder ein Edelgas. Infolge des relativ hohen Stickstoffgehalts der Umgebungsluft kann diese auch direkt als Driftgas verwendet werden, sodass in der Figur 5 lediglich eine Verbindung zur Umgebungsluft dargestellt ist. Dem Driftgas-Zufuhranschluss 74 kann ein Massenflussregler 15 vorgeschaltet sein, wodurch die Zufuhr des Driftgases geregelt und konstant gehalten werden kann. Dem Driftgas-Zufuhranschluss 74 kann ferner ein Filter 14 vorgeschaltet sein, was insbesondere bei Verwendung von Umgebungsluft als Driftgas vorteilhaft ist, um dieses zu reinigen.

Der Ionisationsquellen-Bereich 4, die Reaktionskammer 5, der Bereich des Ionentors 6 und die Driftkammer 7 können untereinander druckverbunden sein, d.h. es erfolgt ein Druckausgleich zwischen diesen Abschnitten des Gehäusekorpus 3. So kann durch die Unterdruckerzeugungseinrichtung 11 der gewünschte Unterdruck erzeugt werden und dabei zugleich Probengas durch den Analyten-Einlassanschluss 55 und Driftgas durch den Driftgas-Zufuhranschluss 74 angesaugt werden. Sämtliche angesaugten Gase werden über die Unterdruckerzeugungseinrichtung 11 dann abgesaugt und wieder abgeführt.

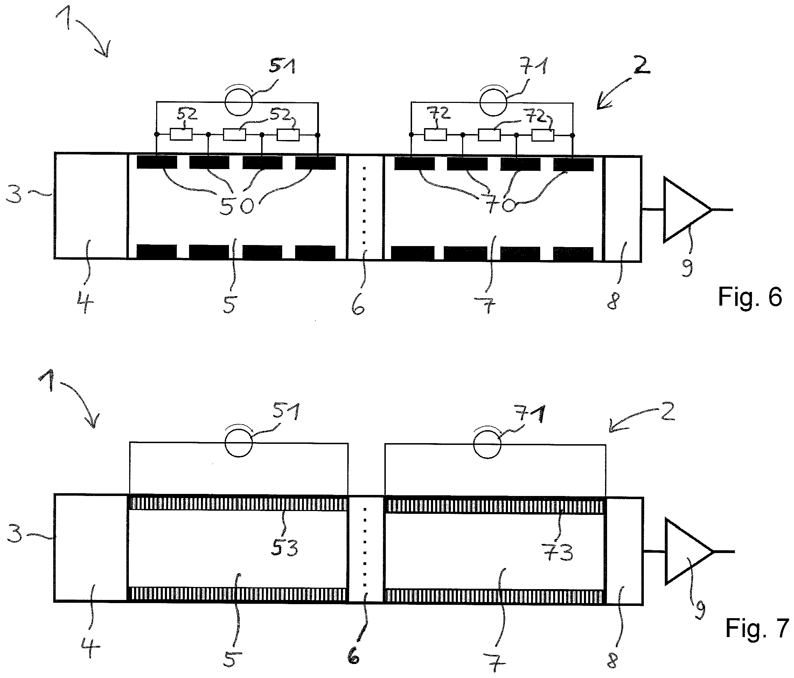

Die Figur 6 zeigt die elektrische Beschaltung der Reaktionskammer 5 und der Driftkammer 7 zur Erzeugung eines elektrischen Felds mit einem Potentialgefälle in Längsrichtung des Gehäusekorpus 3, d.h. von links nach rechts. Beispielsweise können die dargestellten Ringelektroden 50 über eine aus Widerständen 52 aufgebaute Spannungsteilerschaltung mit einer Spannungsquelle 51 verbunden sein. Entsprechend können die Elektroden 70 über eine aus Widerständen 72 aufgebaute Spannungsteilerschaltung mit einer Spannungsquelle 71 verbunden sein. Die erste Felderzeugungseinrichtung, die der Reaktionskammer 5 zugeordnet ist, weist daher außer den Elektroden 50 noch die Spannungsquelle 51 und die Widerstände 52 auf. Die der Driftkammer 7 zugeordnete zweite Felderzeugungseinrichtung weist neben den Elektroden 70 noch die Spannungsquelle 71 und die Widerstände 72 auf.

Die Figur 7 zeigt eine alternative Ausführungsform der ersten und der zweiten Felderzeugungseinrichtung, bei der jeweils statt der Ringelektroden kontinuierliche, durchgehende Elektroden 53, 73 vorgesehen sind, z.B. in Form von Zylindern aus leitfähigem Glas. In diesem Fall können die zuvor erläuterten externen Spannungsteilerschaltungen entfallen, da durch den relativ hohen spezifischen Widerstand der Elektroden 53, 73 bereits eine kontinuierliche Spannungsteilung erfolgt.

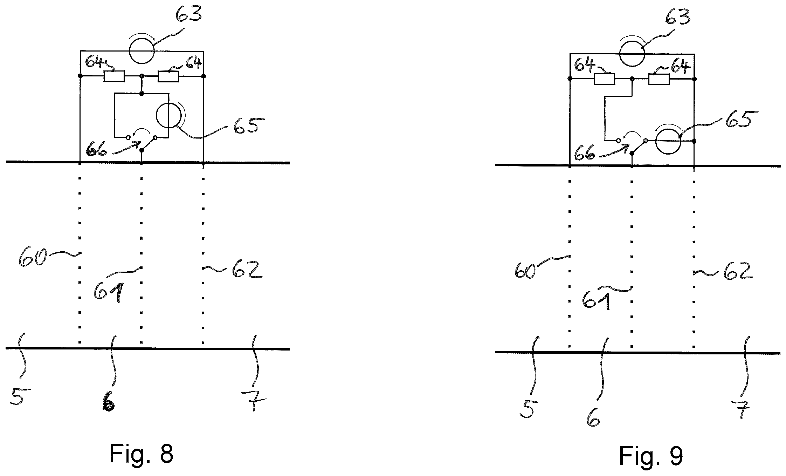

Die Figur 8 zeigt eine erste Ausführungsform des Ionentors 6 mit drei Elektroden 60, 61, 62, die in Richtung vom Reaktionsraum 5 zur Driftkammer 7 hin hintereinander angeordnet sind, z.B. im Abstand von etwa 450 Mikrometern. Die Elektroden 60, 61, 62 können ebenfalls als Ringelektroden ausgebildet sein, wie die Elektroden 50, 70, oder wie in Figur 8 angedeutet als Gitterelektroden. Die jeweils äußeren Elektroden 60, 62 sind dabei mit einer ersten Ionentor-Spannungsquelle 63 verbunden, durch die eine Gatespannung bereitgestellt wird. Die mittlere Elektrode 61 ist über eine betätigbare Schalteinrichtung 66, z.B. einen Halbleiterschalter oder eine Anordnung aus Halbleiterschaltern, wechselweise mit einem durch Widerstände 64 eines Spannungsteilers aus der Gatespannung erzeugten Spannungspotential oder einem gegenüber diesem Spannungspotential um eine Blockspannung verschobenen Spannungspotential verbindbar. Die Blockspannung wird von einer zweiten Ionentor-Spannungsquelle 65 bereitgestellt. Ist die betätigbare Schalteinrichtung 66 in dem in Figur 8 dargestellten Schaltzustand, ist somit die Blockspannung der zweiten lonentor-Spannungsquelle 65 wirksam, was zu einem Sperren des Ionentors führt. In diesem Zustand werden die Ionen in der Reaktionskammer 5 von einem Eintritt in die Driftkammer 7 abgehalten. Durch Umschalten in die zweite dargestellte Schaltposition der Schalteinrichtung 66 kann das Ionentor geöffnet werden. In diesem Zustand wandern die Ionen von der Reaktionskammer 5 in die Driftkammer 7.

Die Figur 9 zeigt eine alternative Ausführungsform des Ionentors 6, bei der die elektrische Verschaltung der zweiten Ionentor-Spannungsquelle 65 im Vergleich zu Figur 8 dahingehend geändert ist, dass die zweite Ionentor-Spannungsquelle 65 nun mit ihrem einen Anschluss direkt mit der Elektrode 62 verbunden ist, während der andere Anschluss nach wie vor mit der Schalteinrichtung 66 verbunden ist. Auf diese Weise haben die Blockspannung und die Gatespannung das gleiche Bezugspotential.

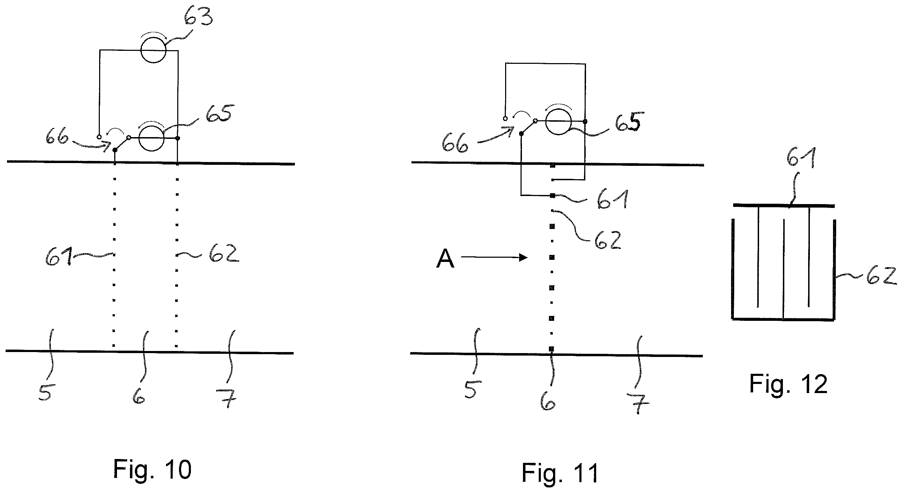

Die Figur 10 zeigt eine Ausführungsform des Ionentors 6, bei der nur zwei Elektroden 61, 62 vorhanden sind. Durch eine Schalteinrichtung 66 kann das an der linken Elektrode 61 wirksame Potential umgeschaltet werden von der ersten lonentor-Spannungsquelle 63 auf die zweite Ionentor-Spannungsquelle 65. Die rechte Elektrode 62 ist mit beiden Spannungsquellen 63, 65 verbunden.

Die Figur 11 zeigt eine Ausführungsform des Ionentors 6, bei der eine interdigitale Ausführungsform der Elektroden 61, 62 realisiert ist. Die Elektroden 61, 62 befinden sich in derselben Ebene und sind ineinander verzahnt angeordnet, wie in der Figur 12 dargestellt ist, die eine Ansicht auf die Elektroden 61, 62 in Blickrichtung A der Figur 11 zeigt. In der Ausführungsform gemäß Figur 11 ist nur eine einzige Spannungsquelle 65 vorhanden, die die Blockspannung bereitstellt. Über eine betätigbare Schalteinrichtung 66 kann die Elektrode 61 wahlweise mit der Spannungsquelle 65 oder direkt mit der anderen Elektrode 62 verbunden werden.

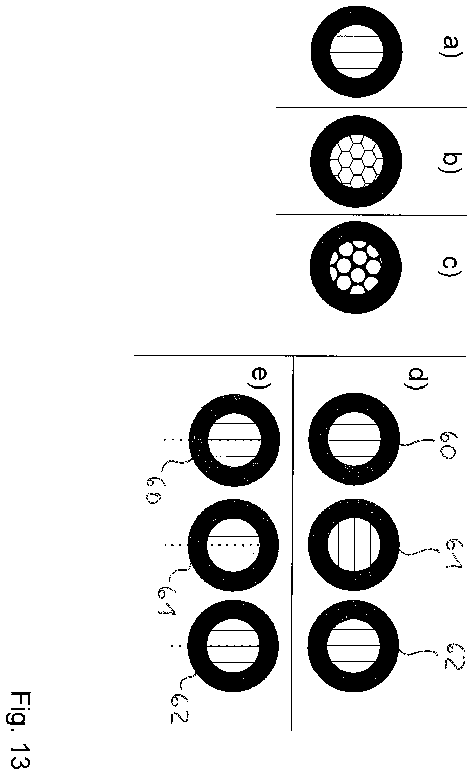

Die Figur 13 zeigt in den Ansichten a), b) und c) verschiedene Elektrodenformen von Gitterelektroden, wie sie als Elektroden 60, 61, 62 verwendet werden können. Gemäß Ausführungsform a) weist die Elektrode streifenförmige Leiter auf, die sich vertikal, horizontal oder diagonal erstrecken können. Gemäß Ausführungsform b) weist die Elektrode eine hexagonale Struktur der Leiter auf. Gemäß Ausführungsform c) weist die Elektrode eine Leiteranordnung mit kreisförmigen Ausschnitten auf.

Die Ansicht d) zeigt die drei bereits erwähnten Elektroden 60, 61, 62 nebeneinander. Erkennbar ist, dass die Elektroden hintereinander in unterschiedlicher Orientierung der streifenförmigen Leiter angeordnet sein können, um die Wirksamkeit des Ionentors zu erhöhen.

Die Ansicht e) zeigt die drei bereits erwähnten Elektroden 60, 61, 62 nebeneinander. Erkennbar ist, dass die Elektroden 60, 61, 62 auch zueinander versetzt angeordnete streifenförmige Leiter aufweisen können, wie durch die mit punktierter Linie dargestellte Symmetrieachse verdeutlicht wird.

Die in Figur 13 wiedergegebenen Ansichten zeigen die Elektroden in Blickrichtung A der Figur 11.

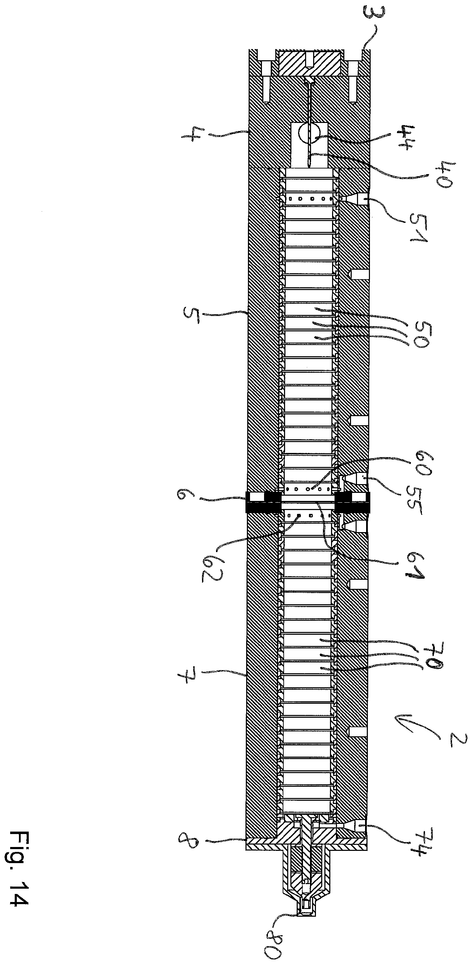

Die Figur 14 zeigt eine konstruktive Ausführung des lonenmobilitätsspektrometers 2 mit den zuvor bereits erläuterten Elementen. Wie erkennbar ist, sind in der dargestellten Ausführungsform eine größere Anzahl von Elektroden 50, 70 vorhanden als in den vorherigen schematischen Darstellungen.

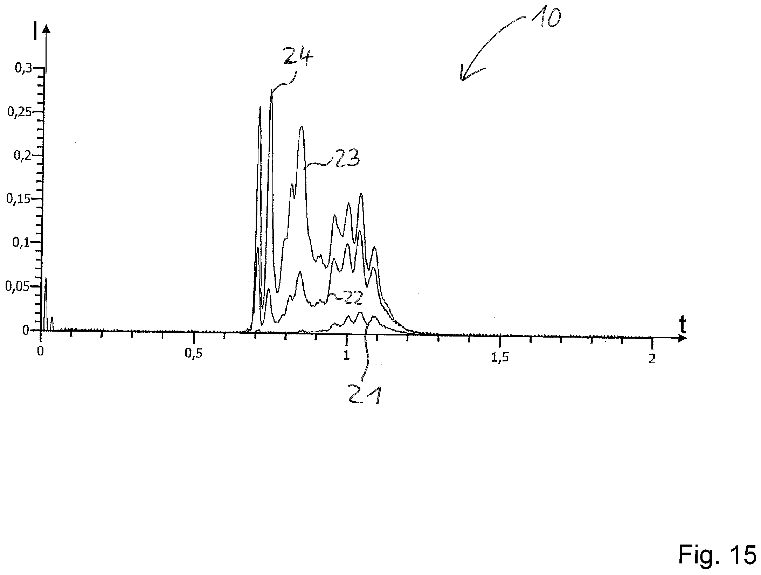

Die Figur 15 zeigt beispielhaft ein mit der Gasanalyseeinrichtung mit einem Ionenmobilitätsspektrometer 2 gemäß einer der vorherigen Figuren aufgenommenen Spektrogramm 10. Dargestellt ist der gemessene lonenstrom I in Nanoampere über die Zeit t, d.h. die Driftzeit in Millisekunden. Es wurden drei Messkurven 21, 22, 23, die sich hinsichtlich der Stromamplitude unterscheiden, aufgenommen. Die drei unterschiedlichen Messkurven wurden bei unterschiedlichen Spannungen der Spannungsquelle 71, d.h. unterschiedlichen Feldstärken in der Driftkammer 7 aufgenommen. Die dabei auftretenden Spitzenwerte sind charakteristisch für bestimmte im Probengas enthaltene Substanzen. Die Spitze 24 ist durch die Reaktant-Ionen hervorgerufen.

Zur Durchführung einer Gasanalyse kann die beschriebene Gasanalyseeinrichtung 1 wie folgt betrieben werden.

Das Probengas wird durch den Analyten-Einlassanschluss 55 vor dem Ionentor 6 in die Reaktionskammer 5 eingeleitet. Das Probengas enthält zu diesem Zeitpunkt noch elektrisch neutrale Analyten, d.h. keine Analyt-Ionen. Durch den der Reaktionskammer 5 vorgeschalteten Ionisierungsquellen-Bereich 4 kann eine Ionisierung durchgeführt werden. Es werden dort durch die Ionisationsquelle 40, 41, 42, 43 und ggf. direkt ablaufende chemische Gasphasenreaktionen zwischen Stickstoff, Sauerstoff und Wasser zunächst Reaktant-Ionen in Form von H₃O⁺ erzeugt. Dabei liegen in der Reaktionskammer Bedingungen vor, unter anderem ein definierter Unterdruck und eine definierte Feldstärke, durch die eine Bildung von unerwünschten Wasserclustern energetisch unterdrückt wird und somit eine große Menge an freien H₃O⁺ Reaktant-Ionen zur Verfügung steht. Gleichzeitig wird das Driftgas über den Driftgas-Zufuhranschluss 74 in die Driftkammer 7 eingeleitet. Das Driftgas durchströmt die Driftkammer 7, das angrenzende Ionentor 6 sowie die daran angrenzende Reaktionskammer 5, um durch die Unterdruckerzeugungseinrichtung 11 am Ende des Gehäusekorpus 3 angesaugt zu werden. Das die Reaktionskammer 5 durchströmende Driftgas zieht das eingeleitete Probengas entgegensetzt der durch das elektrische Feld vorgegebenen Driftrichtung durch die Reaktionskammer. Auf ihrem Weg durch die Reaktionskammer werden die Analyten-Moleküle des Probengases durch Ladungstransfer beim Stoß mit Reaktant-Ionen ionisiert. Die auf diese Weise gebildeten Analyt-Ionen bewegen sich dann nach erfolgter Ionisierung entgegensetzt ihrer vorherigen Driftrichtung in Richtung des Ionentors 6.

In die Reaktionskammer 5 können über den Massenflussregler 12 oder auch durch eine feste Verbindung Wasserdampf oder andere Gase hinzugegeben werden, um die Menge an möglichen Reaktant-Ionen weiter zu erhöhen bzw. zu variieren. Aufgrund der somit in der Reaktionskammer existierenden hohen Dichte an freien Reaktant-Ionen können verschiedene Analyte gleichzeitig ionisiert werden und es kann einer Maskierung von Stoffen entgegengewirkt werden. Weiterhin kann der Einfluss der im Probengas vorliegenden Luftfeuchte deutlich verringert werden und eine direkte Detektion von Substanzen mit Protonenaffinitäten, die unter denen von Wasserclustern liegen, im feuchten Probengasgemisch überhaupt erst ermöglicht werden

Durch ein Öffnen des Ionentors 6 zu einem definierten Zeitpunkt (t = 0 in Figur 15) gelangen die Analyt-Ionen in den Driftbereich der Driftkammer 7 und durchqueren diese, um am lonendetektor 8 detektiert zu werden. Die Verstärkung des Signals des lonendetektors 8 erfolgt z.B. mit einem Verstärker 9 mit für den Anwendungsfall optimierter Bandbreite, z.B. mit einer Bandbreite von 60 KHz. Hierdurch kann unerwünschtes Rauschen minimiert werden. Als lonenmobilitätsspektrum 10 wird ein zeitabhängiger Detektorstrom des lonendetektors 8 gemessen, aus dem sich die von der jeweiligen Substanz abhängende lonenmobilität berechnen lässt. Die Aufnahme des lonenmobilitätsspektrums 10 kann mehrfach pro Sekunde wiederholt werden, z.B. mit einer Wiederholfrequenz von 500 Hz.

Beispielhafte Betriebsparameter für die Reaktionskammer sind eine Feldstärke von 45 V pro mm bei einem Druck von 20 mbar und einer Länge von 100 mm der Reaktionskammer 5. Beispielhafte Parameter der Driftkammer 7 sind eine Feldstärke von 12 V pro mm bei einem Druck von 20 mbar und einer Länge der Driftkammer von 100 mm. Das elektrische Feld kann ein statisches elektrisches Feld sein, oder ein dynamisch veränderliches elektrisches Feld.

Der zuvor beschriebene Vorgang, bei der eine Protonierung mit H₃O⁺ Reaktant-Ionen erfolgt, was zu positiven Analyt-Ionen führt, kann bei Umpolung der elektrischen Felder auch in anderer Weise erfolgen. So können negative Analyt-Ionen erzeugt werden, wobei ein Ladungstransfer z.B. durch OH⁻ Reaktant-Ionen erfolgen kann.

Durch den Betrieb der Gasanalyseeinrichtung 1 bei Unterdruck ist die Zuführung des Probengases einfach zu realisieren, da die Probe durch den Analyten-Einlassanschluss 55 in das System gesaugt werden kann. Weiterhin sind durch den Unterdruck sowohl besonders schnelle Ansprechzeiten als auch geringere Refraktärzeiten begünstigt.

Die elektrische Feldstärke im Bereich des Ionentors 6 ist z.B. so zu wählen, dass ein definiertes Öffnen und Schließen des Ionentors 6 bei maximaler Transmission der Ionen aus der Reaktionskammer 5 in die Driftkammer 7 gewährleistet ist. Optimale Parameter für den Betrieb hängen von dem jeweiligen Druck und der Feldstärke in der Driftkammer und in der Reaktionskammer ab. Das Ionentor 6 kann wahlweise dabei auch so betrieben werden, dass die Öffnungsdauer und der Zeitpunkt des Öffnens des Ionentors nach bestimmten Mustern vorgenommen werden, wodurch sich am lonendetektor 8 ein zeitabhängiger Strom ergibt, aus welchem sich durch Transformation, z.B. Hadamard- oder Fourier-Transformation, des entstehenden Signals die lonenmobilität berechnen lässt. Auch hierdurch kann das Signal-zu-Rausch-Verhältnis des erhaltenen Spektrums verbessert werden.

Die Driftkammer 7 kann auch nach einem anderen Separationsverfahren, wie z.B. FAIMS, betrieben werden.

Durch eine Variation der Feldstärke in der Reaktionskammer kann die Dichte der zur Verfügung stehenden freien H₃O⁺ Reaktant-Ionen verändert werden. Hierdurch kann der Einfluss konkurrierender lonisationsprozesse auf das erhaltene Spektrum bei Bedarf verändert werden und somit innerhalb von wenigen Millisekunden eine zusätzliche Aussage über die Protonenaffinität bzw. die Elektronenaffinität der im Spektrum enthaltenen Substanzen getroffen werden.

Versuche mit der erfindungsgemäßen Gasanalyseeinrichtung zeigen, dass Substanzen mit geringen Protonenaffinitäten, z.B. 190 ppb 1-Hexanol, bei unterschiedlichen Feuchten des Probengases, z.B. weniger als 1 % bis 80 % relative Luftfeuchte, mit der gleichen Sensitivität nachweisbar sind. Weiterhin wurde eine Substanz mit deutlicher höherer Protonenaffinität, z.B. 500 ppb 2-Nonanone zugegeben, welches ebenfalls zu keiner Änderung der Signalstärke des weniger protonenaffinen Stoffs führte.

Durch eine Variation der Feldstärke in der Reaktionskammer kann festgestellt werden, ob einige Substanzen eine höhere Protonenaffinität aufweisen, da sie bereits bei geringen Feldstärken ionisiert werden können. Somit kann mit der erfindungsgemäßen Gasanalyseeinrichtung eine zusätzliche Information zur Identifikation der jeweiligen Stoffe gewonnen werden.

## Patentansprüche

1. Gasanalyseeinrichtung (1), die wenigstens folgende Komponenten aufweist:
a) ein lonenmobilitätsspektrometer (2),
b) eine auf eine Reaktionskammer (5) des lonenmobilitätsspektrometers (2) einwirkende Energiezufuhreinrichtung, die zum Manipulieren der Dichte an freien Reaktant-Ionen in der Reaktionskammer (5) durch Energiezufuhr eingerichtet ist,
c) eine erste Felderzeugungseinrichtung (50, 51, 52, 53) als Energiezufuhreinrichtung, die zum Erzeugen eines elektrischen Felds in der Reaktionskammer (5) eingerichtet ist,
d) eine mit einer Reaktionskammer (5) des lonenmobilitätsspektrometers (2) gekoppelte Unterdruckerzeugungseinrichtung (11), die zur Erzeugung eines Unterdrucks gegenüber dem Atmosphärendruck wenigstens in der Reaktionskammer (5) eingerichtet ist,
e) wobei durch die Unterdruckerzeugungseinrichtung (11) ein Unterdruck im Bereich von 2 mbar bis 100 mbar Absolutdruck in der Reaktionskammer (5) erzeugt ist und
f) wobei durch die erste Felderzeugungseinrichtung (50, 51, 52, 53) eine Feldstärke des elektrischen Felds in der Reaktionskammer (5) erzeugt ist, bei der bei gegebenem Unterdruck infolge der dadurch reduzierten Teilchendichte die Teilchen in der Reaktionskammer zwischen zwei Stößen soweit durch Energiezufuhr durch das elektrische Feld beschleunigt sind, dass erwünschte freie Reaktant-Ionen von daran gebundenen Wassermolekülen und anderen unerwünschten Bindungspartnern befreit sind und/oder Bindungen der erwünschten Reaktant-Ionen mit Wassermolekülen oder anderen unerwünschten Bindungspartnern ganz oder teilweise unterdrückt sind.

2. Gasanalyseeinrichtung nach dem vorhergehenden Anspruch, wobei die Gasanalyseeinrichtung (1), insbesondere deren lonenmobilitätsspektrometer (2), wenigstens folgende Komponenten aufweist:
a) einen lonisationsquellen-Bereich (4) mit einer Ionisationsquelle (40, 41, 42, 43),
b) die Reaktionskammer (5), die mit dem lonisationsquellen-Bereich (4) gekoppelt ist,
c) eine Driftkammer (7), die einen Driftgas-Zufuhranschluss (74) aufweist, der mit einer Gaszufuhrleitung (75) zur Zuführung von Driftgas in die Driftkammer verbunden ist,
d) ein schaltbares lonentor (6) zwischen der Reaktionskammer (5) und der Driftkammer (7),
e) einen Ionendetektor (8) an dem dem lonentor (6) abgewandten Ende der Driftkammer (7),
f) eine zweite Felderzeugungseinrichtung (70, 71, 72, 73), die zum Erzeugen eines elektrischen Felds in der Driftkammer (7) eingerichtet ist.

3. Gasanalyseeinrichtung nach Anspruch 2, **dadurch gekennzeichnet, dass** das lonentor (6) wenigstens drei in Richtung von der Reaktionskammer (5) zu der Driftkammer (7) hintereinander angeordnete Elektroden (60, 61, 62) aufweist.

4. Gasanalyseeinrichtung nach Anspruch 3, **dadurch gekennzeichnet, dass** die mittlere Elektrode (60, 61, 62) von drei in Richtung von der Reaktionskammer (5) zu der Driftkammer (7) hintereinander angeordneten Elektroden (60, 61, 62) des lonentors (6) mittels einer elektrischen (66) Schalteinrichtung der Gasanalyseeinrichtung (1) potentialumschaltbar ist.

5. Gasanalyseeinrichtung nach Anspruch 1, **dadurch gekennzeichnet, dass** die Unterdruckerzeugungseinrichtung (11) zur Erzeugung eines Driftgasstroms entgegen der Driftrichtung der Ionen in der Driftkammer (7) eingerichtet ist.

6. Gasanalyseeinrichtung nach einem der Ansprüche 1 bis 5, **dadurch gekennzeichnet, dass** die Unterdruckerzeugungseinrichtung (11) einen Sauganschluss (110) aufweist, der mit einem Absauganschluss (44) der Gasanalyseeinrichtung (1) verbunden ist, der in Driftrichtung der Ionen vor dem lonentor (6) angeordnet ist.

7. Gasanalyseeinrichtung nach einem der vorhergehenden Ansprüche, **dadurch gekennzeichnet, dass** die Reaktionskammer (5) mit der Driftkammer (7) druckverbunden ist.

8. Verfahren zur Gasanalyse mittels einer Gasanalyseeinrichtung (1) nach dem Ionenmobilitätsspektrometrie-Verfahren, **dadurch gekennzeichnet, dass** die Dichte an freien Reaktant-Ionen in der Reaktionskammer (5) durch Energiezufuhr mittels einer auf eine Reaktionskammer (5) des Ionenmobilitätsspektrometers (2) einwirkenden Energiezufuhreinrichtung manipuliert wird, um erwünschte freie Reaktant-Ionen von deren unerwünschten Bindungspartnern zu befreien und/oder Bindungen der erwünschten Reaktant-Ionen mit unerwünschten Bindungspartnern ganz oder teilweise zu unterdrücken, wobei wenigstens die Reaktionskammer (5) während des Betriebs der Gasanalyseeinrichtung (1) mit einem Unterdruck gegenüber dem Atmosphärendruck im Bereich von 2 mbar bis 100 mbar Absolutdruck beaufschlagt wird, wobei durch die Energiezufuhreinrichtung in Form einer ersten Felderzeugungseinrichtung (50, 51, 52, 53) eine Feldstärke des elektrischen Felds in der Reaktionskammer (5) erzeugt wird, bei der bei gegebenem Unterdruck infolge der dadurch reduzierten Teilchendichte die Teilchen in der Reaktionskammer zwischen zwei Stößen soweit durch Energiezufuhr durch das elektrische Feld beschleunigt werden, dass erwünschte freie Reaktant-Ionen von daran gebundenen Wassermolekülen und anderen unerwünschten Bindungspartnern befreit werden und/oder Bindungen der erwünschten Reaktant-Ionen mit Wassermolekülen oder anderen unerwünschten Bindungspartnern ganz oder teilweise unterdrückt werden.

9. Verfahren nach Anspruch 8, **dadurch gekennzeichnet, dass** in der Reaktionskammer (5) und in der Driftkammer (7) ein elektrisches Feld in gewünschter Driftrichtung der Ionen in der Driftkammer (7) erzeugt wird.

10. Verfahren nach Anspruch 8, **dadurch gekennzeichnet, dass** zu analysierendes Gas mittels des Unterdrucks in der Reaktionskammer (5) durch einen Analyten-Einlassanschluss (55) der Gasanalyseeinrichtung in die Reaktionskammer eingesaugt wird.

11. Verfahren nach einem der Ansprüche 8 bis 10, **dadurch gekennzeichnet, dass** ein Driftgas in die Driftkammer (7) eingeleitet wird und durch den Unterdruck in der Reaktionskammer (5) entgegen der Driftrichtung der Ionen durch die Driftkammer (7) geführt wird.

12. Verfahren nach einem der Ansprüche 8 bis 11, **dadurch gekennzeichnet, dass** die Energiezufuhr in der Reaktionskammer (5) systematisch verändert wird, so dass sich unterschiedliche Dichten an freien und an Wasser gebundenen Reaktant-Ionen ausbilden, um Aussagen über die lonisierbarkeit der zu analysierenden Substanzen bei unterschiedlich stark gebundenen Reaktant-Ionen zu erhalten.

## Claims

1. Gas analyzing device (1) comprising at least the following components:
a) an ion mobility spectrometer (2),
b) an energy supply device which acts on a reaction chamber (5) of the ion mobility spectrometer (2) and which is geared to manipulating the density of free reactant ions in the reaction chamber (5) by supply of energy,
c) a first field generation device (50, 51, 52, 53), as energy supply device, which is geared to generating an electric field in the reaction chamber (5),
d) a negative-pressure generation device (11) which is coupled to a reaction chamber (5) of the ion mobility spectrometer (2) and which is geared to generating a negative pressure with respect to the atmospheric pressure at least in the reaction chamber (5),
e) wherein the negative-pressure generation device (11) generates a negative pressure within the range from 2 mbar to 100 mbar absolute pressure in the reaction chamber (5) and
f) wherein the first field generation device (50, 51, 52, 53) generates in the reaction chamber (5) a field strength of the electric field, at which, at a given negative pressure, the particles in the reaction chamber are accelerated between two collisions as a result of supply of energy by the electric field because of the thereby reduced particle density such that desired free reactant ions are cleared of water molecules or other unwanted binding partners bound thereto and/or bonds of the desired reactant ions with water molecules or other unwanted binding partners are completely or partially suppressed.

2. Gas analyzing device as claimed in the preceding claim, wherein the gas analyzing device (1), more particularly the ion mobility spectrometer (2) thereof, comprises at least the following components:
a) an ionization source region (4) having an ionization source (40, 41, 42, 43),
b) the reaction chamber (5) coupled to the ionization source region (4),
c) a drift chamber (7) comprising a drift gas supply connector (74) connected to a gas supply line (75) for supplying drift gas into the drift chamber,
d) a switchable ion gate (6) between the reaction chamber (5) and the drift chamber (7),
e) an ion detector (8) at the end of the drift chamber (7) that is facing away from the ion gate (6),
f) a second field generation device (70, 71, 72, 73) which is geared to generating an electric field in the drift chamber (7).

3. Gas analyzing device as claimed in claim 2, **characterized in that** the ion gate (6) comprises at least three electrodes (60, 61, 62) arranged in succession in the direction from the reaction chamber (5) to the drift chamber (7).

4. Gas analyzing device as claimed in claim 3, **characterized in that** the middle electrode (60, 61, 62) of three electrodes (60, 61, 62) arranged in succession in the direction from the reaction chamber (5) to the drift chamber (7) of the ion gate (6) is switchable in terms of potential by means of an electric (66) switching mechanism of the gas analyzing device (1).

5. Gas analyzing device as claimed in claim 1, **characterized in that** the negative-pressure generation device (11) is geared to generating a drift gas stream against the drift direction of the ions in the drift chamber (7).

6. Gas analyzing device as claimed in any of claims 1 to 5, **characterized in that** the negative-pressure generation device (11) comprises a suction connector (110) connected to a suck-off connector (44) of the gas analyzing device (1), which suck-off connector is arranged in front of the ion gate (6) in the drift direction of the ions.

7. Gas analyzing device as claimed in any of the preceding claims, **characterized in that** the reaction chamber (5) is pressure-connected to the drift chamber (7).

8. Method for analyzing gas by means of a gas analyzing device (1) according to the ion mobility spectrometry method, **characterized in that** the density of free reactant ions in the reaction chamber (5) is manipulated by supply of energy by means of an energy supply device acting on a reaction chamber (5) of the ion mobility spectrometer (2) in order to clear desired free reactant ions of the undesired binding partners thereof and/or to completely or partially suppress bonds of the desired reactant ions with undesired binding partners, wherein at least the reaction chamber (5) is subjected to application of a negative pressure with respect to the atmospheric pressure within the range from 2 mbar to 100 mbar absolute pressure during the operation of the gas analyzing device (1), wherein the energy supply device in the form of a first field generation device (50, 51, 52, 53) generates in the reaction chamber (5) a field strength of the electric field, at which, at a given negative pressure, the particles in the reaction chamber are accelerated between two collisions as a result of supply of energy by the electric field because of the thereby reduced particle density such that desired free reactant ions are cleared of water molecules or other unwanted binding partners bound thereto and/or bonds of the desired reactant ions with water molecules or other unwanted binding partners are completely or partially suppressed.

9. Method as claimed in claim 8, **characterized in that** an electric field is generated in the reaction chamber (5) and in the drift chamber (7) in the desired drift direction of the ions in the drift chamber (7).

10. Method as claimed in claim 8, **characterized in that** gas to be analyzed is sucked into the reaction chamber through an analyte inlet connector (55) of the gas analyzing device by means of the negative pressure in the reaction chamber (5).

11. Method as claimed in any of claims 8 to 10, **characterized in that** a drift gas is introduced into the drift chamber (7) and is, owing to the negative pressure in the reaction chamber (5), guided through the drift chamber (7) against the drift direction of the ions.

12. Method as claimed in any of claims 8 to 11, **characterized in that** the supply of energy in the reaction chamber (5) is systematically changed, such that different densities of free and water-bound reactant ions occur, in order to obtain information about the ionizability of the substances to be analyzed with reactant ions which are bound to varying extents.

## Revendications

1. Système d'analyse de gaz (1), qui comporte au moins les composants suivants :
a) un spectromètre à mobilité d'ions (2),
b) un système d'apport d'énergie agissant sur la chambre de réaction (5) du spectromètre à mobilité d'ions (2) qui est installé dans la chambre de réaction (5) pour la manipulation de la densité sur des ions réactifs par apport d'énergie,
c) un premier système générateur de champ (50, 51, 52, 53) en tant que système d'apport d'énergie, qui est installé dans la chambre de réaction (5) pour générer un champ électrique,
d) un système générateur de dépression (11) accouplé avec la chambre de réaction (5) du spectromètre à mobilité d'ions (2) qui est installé au moins dans la chambre de réaction (5) pour générer une dépression par rapport à la pression atmosphérique,
e) par le système générateur de dépression (11), une dépression de l'ordre de 2 mbar à 100 mbar de pression absolue étant générée dans la chambre de réaction (5) et
f) par le premier système générateur de champ (50, 51, 52, 53) étant générée dans la chambre de réaction (5) une intensité de champ du champ électrique avec laquelle, lors d'une dépression donnée, suite à la densité des particules réduite de ce fait, entre deux chocs, les particules dans la chambre de réaction sont accélérées par apport d'énergie via le champ électrique jusqu'à ce que des ions réactifs libres souhaités se libèrent de molécules d'eau qui y sont liées et d'autres partenaires de liaison non souhaitables et/ou des liaisons des ions réactifs souhaités avec des molécules d'eau ou d'autres partenaires de liaison non souhaitables soient réprimées.

2. Système d'analyse de gaz selon la revendication précédente, le système d'analyse de gaz (1), notamment son spectromètre à mobilité d'ions (2) comportant au moins les composants suivants :
a) une zone de source ionisante (4) dotée d'une source ionisante (40, 41, 42, 43),
b) la chambre de réaction (5), qui est accouplée avec la zone de source ionisante (4),
c) une chambre de dérive (7), qui comporte un raccord d'alimentation de gaz de dérive (74), qui est relié avec un conduit d'alimentation de gaz (75) pour alimenter du gaz de dérive dans la chambre de dérive,
d) une porte à ions (6) commutable entre la chambre de réaction (5) et la chambre de dérive (7),
e) un détecteur d'ions (8) sur l'extrémité opposée à la porte à ions (6) de la chambre de dérive (7),
f) un deuxième système générateur de champ (70, 71, 72, 73), qui est installé dans la chambre de dérive (7) pour la génération d'un champ électrique.

3. Système d'analyse de gaz selon la revendication 2, **caractérisé en ce que** la porte à ions (6) comporte au moins trois électrodes (60, 61, 62) placées les unes derrière les autres dans la direction de la chambre de réaction (5) vers la chambre de dérive (7) .

4. Système d'analyse de gaz selon la revendication 3, **caractérisé en ce que** l'électrode centrale (60, 61, 62) parmi trois électrodes (60, 61, 62) de la porte à ions (6) placées les unes derrière les autres dans la direction de la chambre de réaction (5) vers la chambre de dérive (7) est à potentiel inversable au moyen d'un système de commutation électrique (66) du système d'analyse de gaz (1).

5. Système d'analyse de gaz selon la revendication 1, **caractérisé en ce que** le système générateur de dépression (11) est installé dans la chambre de dérive (7) pour générer un flux de gaz de dérive à l'encontre de la direction de dérive des ions.

6. Système d'analyse de gaz selon l'une quelconque des revendications 1 à 5, **caractérisé en ce que** le système générateur de dépression (11) comporte un raccord d'aspiration (110) qui est relié avec un raccord de succion (44) du système d'analyse de gaz (1) qui dans la direction de dérive des ions est placé à l'avant de la porte à ions (6).

7. Système d'analyse de gaz selon l'une quelconque des revendications précédentes, **caractérisé en ce que** la chambre de réaction (5) est reliée par pression avec la chambre de dérive (7).

8. Procédé, destiné à l'analyse de gaz au moyen d'un système d'analyse de gaz (1) selon le procédé de spectrométrie à mobilité ionique, **caractérisé en ce que** dans la chambre de réaction (5), on manipule la densité sur des ions réactifs par apport d'énergie au moyen d'un système d'apport d'énergie agissant sur une chambre de réaction (5) du spectromètre à mobilité ionique (2), pour libérer des ions réactifs libres de leurs partenaires de liaison non souhaitables et/ou pour réprimer totalement ou partiellement des liaisons des ions réactifs souhaités avec des partenaires de liaison non souhaitables, pendant le fonctionnement du système d'analyse de gaz (1), au moins la chambre de réaction (5) étant soumise à une dépression par rapport à la pression atmosphérique dans l'ordre de 2 mbar à 100 mbar de pression absolue, par le système d'apport d'énergie, sous la forme d'un premier système générateur de champ (50, 51, 52, 53) étant générée dans la chambre de réaction (5) une intensité de champ du champ électrique avec laquelle, lors d'une dépression donnée, suite à la densité des particules réduite de ce fait, entre deux chocs, les particules dans la chambre de réaction sont accélérées par apport d'énergie via le champ électrique jusqu'à ce que des ions réactifs libres souhaités se libèrent de molécules d'eau qui y sont liées et d'autres partenaires de liaison non souhaitables et/ou des liaisons des ions réactifs souhaités avec des molécules d'eau ou d'autres partenaires de liaison non souhaitables soient réprimées.

9. Procédé selon la revendication 8, **caractérisé en ce que** dans la chambre de réaction (5) et dans la chambre de dérive (7), un champ électrique est généré dans la direction de dérive souhaitée des ions dans la chambre de dérive (7).

10. Procédé selon la revendication 8, **caractérisé en ce qu'**au au moyen de la dépression dans la chambre de réaction (5), du gaz à analyser est aspiré dans la chambre de réaction à travers un raccord d'entrée de substances à analyser (55) du système d'analyse de gaz.

11. Procédé selon l'une quelconque des revendications 8 à 10, **caractérisé en ce qu'**un gaz de dérive est introduit dans la chambre de dérive (7) et par la dépression dans la chambre de réaction (5), est guidé à l'encontre de la direction de dérive des ions à travers la chambre de dérive (7).

12. Procédé selon l'une quelconque des revendications 8 à 11, **caractérisé en ce que** l'apport d'énergie dans la chambre de réaction (5) varie systématiquement, de sorte que différentes densités se créent sur des ions réactifs libres et liés à de l'eau, pour obtenir des informations sur l'aptitude à l'ionisation des substances à analyser pour des ions réactifs plus ou moins fortement liés.
